# EUROPEAN PATENT APPLICATION

(11) **EP 2 868 682 A2**
(43) Date of publication of application: **06.05.2015**
(21) Application number: 14186675.6
(22) Date of filing: 26.09.2014
(51) Int. Cl.: C08G 18/78, C08G 18/81, C08G 18/48, C09J 175/14

(54) **Tri-curable adhesive composition and method**

(30) Priority: 08.10.2013 US 201314048597
(71) Applicant: DYMAX CORPORATION, Torrington, CT 06790 (US)
(72) Inventor: Rahim, Marufur, Avon, CT Connecticut 06001 (US); Audia, Maria Fe Aton, Torrington, CT Connecticut 06790 (US)
(74) Representative: Algemeen Octrooi- en Merkenbureau B.V.

(57) **Abstract**

A two part composition comprising a Part A and a Part B, wherein Part A comprises an oligomer having both isocyanate and acrylate moieties, and an organic peroxide capable of generating free radicals upon decomposition; and Part B comprises a polyol, and a catalyst that can decompose the organic peroxide. In one form, the two part composition of a Part A and a Part B are in admixture. By combining Part A and Part B the isocyanate moieties react with the polyol to produce a combination of a urethane acrylate oligomer, organic peroxide and the catalyst. Then in either order, the combination is exposed to sufficient actinic radiation to polymerize at least a portion of the urethane acrylate oligomer; and
the catalyst decomposes the organic peroxide thus generating free radicals, which free radicals polymerize at least a portion of the urethane acrylate oligomer.

## Description

### BACKGROUND OF THE INVENTION

### Field of the Invention

The present invention relates to a three-way curable adhesive composition formulation capable of polymerization by exposure to actinic radiation, isocyanate/hydroxyl polyaddition and ambient free radical via peroxide decomposition.

### Description of the Related Art

One-part, ultraviolet (UV) and/or visible light curable, urethane acrylate adhesive compositions are known in the art, however, portions of these compositions remain unreacted and uncured when UV or visible light is blocked and prevented from striking these adhesive compositions. These shadowed areas pose a reliability risk in that a less than ideal adhesive bond is formed, and the uncured, wet or tacky adhesive may chemically solubilize or otherwise attack either or both the adjoining cured adhesive areas, or its substrate, and thus weaken the adhesive bond over time. U.S. patent 6,777,090 describes such a one component UV and heat dual curable system. In such a dual cure system the polymerizable molecule contains a primary or secondary carbamate group and at least one bond (for example acrylate) that can be activated by UV radiation. It was prepared by the reaction of polyfunctional compound containing at least two isocyanate reactive or two acid reactive or two epoxy reactive functional group with polyfunctional epoxides, acids or isocyanate. It can also be mono functional. This system requires heat to cure the carbamate group. The final material can be produced by a compound containing at least two isocyanate, acid or epoxy groups and acrylic bond which can be activated by UV light. This molecule reacts with another molecule which contains acid or epoxy or isocyanate reactive group and also carbamate group. They react together a form a molecule that contains carbamate and acrylic groups. The isocyanate reactive groups are thiol, amino and hydroxyl group, acid reactive functional group is epoxy, epoxy reactive functional groups are sulfonic acid, phosphoric acid, amino group etc. This one component system is not suitable for temperature sensitive substrates. PCT publication

WO 2013/016136 describes a dual moisture curable system. The material has a part A consisting of an oligomer with UV active polymerizable groups containing isocyanate functionalities and also may contain molecules with polyisocyanate monomers or isocyanate polymers which may not contain UV active functional groups. A second part B contains polyol or amine functional crosslinkers. A photoinitiator may be present in either A or B. Part A and B are combined together before use and the mixed viscosity may be in the range from 250cps to 5000 cps at a temperature of 65 °F to 170 °F. The pot life of this material is in the range of 30 to 45 minutes. After UV cure of the acrylate bond the addition reaction between isocyanate and hydroxyl group of the polyol continues to proceed. The lap shear is least 10 grams/sq. inch to about 60g/sq. inch after UV exposure. The peel strength is about 25g/linear inch. The functional groups (amine, hydroxyl or isocyanate) are at the terminal position. The polyol is used as a crosslinker for the isocyanate and the molecular weight is between 250 to 12000g/mole. However, the part of the formulation that is not exposed to UV light will be cured by the reaction of the isocyanate and polyol. However, a drawback of this product is that the acrylate functionality attached to the molecule will not be crosslinked and the resulting product will have unacceptable tensile strength, modulus and Tg properties. This dual cure system has been discussed in the publication Progress in Organic Coatings 53 (2005) 126-133 by Decker et. PCT publication WO2013/013589 describes a two component system having UV as well as activator curing. This publication describes lamination using a two component system cured by UV and peroxide. In the shadow areas the acrylate functionality is cured by the generation of radical by the decomposition of peroxides when it comes in contact with an amine type reducing agent and metal based salt such copper salt. However the surface may stay tacky because of the oxygen inhibition in the dark. The present invention addresses both tacky surface due to oxygen inhibition as well as unreacted acrylate in the dark.

The present invention concerns a two-part urethane acrylate adhesive composition that has the ability to both actinic radiation cure in light-accessible areas and chemically cure in shadowed areas. However, both the actinic radiation curing and a peroxide-based chemical curing mechanisms are free-radical, and thus can be inhibited by the presence of atmospheric oxygen. While this can be overcome for actinic radiation, the peroxide-based chemical cure in shadowed areas is oxygen inhibited to the point that curing of adhesive surfaces exposed to the atmosphere can take days or weeks to progress to the point of acceptability.

There has been a long felt need for an actinic radiation, such as UV or visible light curable system that also shadow cures to a tack-free condition within several hours, such as 24-48 hours at ambient temperatures. Thus the present invention comprises a two part urethane acrylate adhesive system that has the ability to both actinic radiation cure in light-accessible areas and cures tack free in shadowed areas, since the chemical cure reaction in this system is not inhibited by atmospheric oxygen. In addition, a peroxide cure helps the acrylate to crosslink which improve properties of the adhesive which otherwise not possible with only an isocyanate/hydroxyl addition reaction. According to this invention, a two part curable composition is provided wherein three different types of reaction can occur, namely, photocuring activated by actinic light using a photoinitiator via free radical polymerization; peroxide curing usually at room temperature and ambient conditions activated by a metal catalyst, also via free radical polymerization; and addition curing by reaction of isocyanate and hydroxyl containing polymers or oligomers. The result is an adhesive composition that will be curable by actinic light as well as in the dark and the physical properties between samples cured at different cure environments would be comparable.

### SUMMARY OF THE INVENTION

The invention provides a two part composition comprising a Part A and a Part B, wherein Part A comprises an oligomer having both isocyanate and acrylate moieties, and an organic peroxide capable of generating free radicals upon decomposition; and Part B comprises a polyol, and a catalyst that can decompose the organic peroxide.

In one embodiment, the two part composition comprises an admixture of a Part A and a Part B above.

The invention further provides a method which comprises the steps of:
I) providing two composition parts comprising a Part A and a Part B, wherein Part A comprises an oligomer having isocyanate moieties and acrylate moieties, and an organic peroxide capable of generating free radicals upon decomposition; and Part B comprises a polyol, and a catalyst that can decompose the organic peroxide; then
II) combining of Part A and Part B thereby reacting the isocyanate moieties with the polyol to produce a combination of a urethane acrylate oligomer, the organic peroxide and the catalyst; then
   in either order III) and IV):
III) exposing the combination formed in II) to sufficient actinic radiation to polymerize at least a portion of the urethane acrylate oligomer; and
IV) causing the catalyst to decompose the organic peroxide thus generating free radicals upon decomposition of the organic peroxide, which free radicals polymerize at least a portion of the urethane acrylate oligomer.

### BRIEF DESCRIPTION OF THE DRAWINGS

FIG. 1 shows percentage of NCO remaining on a surface exposed to air according to the Examples.
FIG. 2 shows depth of cure in mm according to the Examples.

### DESCRIPTION OF THE INVENTION

The composition of the invention comprises two composition parts a Part A and a Part B which are maintained separate from one another during storage. Part A comprises an oligomer having isocyanate moieties and acrylate moieties, and an organic peroxide capable of generating free radicals upon decomposition. Part B comprises a polyol, and a catalyst that can decompose the organic peroxide. In a first reaction stage, the combining of Part A and Part B cause addition curing by reaction of isocyanate with the hydroxyl containing polymers or oligomers to produce a combination of a urethane acrylate oligomer. In a second stage, the formed combination of urethane acrylate oligomer, organic peroxide and the catalyst are exposed to actinic radiation. The actinic radiation exposure causes at least a portion of the acrylate groups of the formed urethane acrylate oligomer to polymerize or crosslink via a light reaction. The combination of the catalyst with the peroxide allows the catalyst to decompose the peroxide, thus forming free radicals which further polymerize or crosslink at least a portion of the urethane acrylate oligomer in a dark reaction, that is with or without the presence of actinic radiation. This dark reaction is much slower than the actinic radiation reaction, however, it allows a much more complete curing of the overall composition, usually in less than about 48 hours. In a preferred embodiment, at least one of Part A and Part B further comprise a photoinitiator capable of generating free radicals when exposed to actinic radiation. This accelerates the polymerization or crosslinking of the acrylate groups of the urethane acrylate oligomer to polymerize or crosslink via a light reaction. Thus the molecule that contains both an acrylate group and an isocyanate group can undergo both photocure and a polyaddition reaction of the isocyanate/hydroxyl groups in the illuminated areas. In shadowed areas it can be cured both with peroxide and polyaddition reaction of the isocyanate/hydroxyl groups. The oxygen inhibition on the surface, which creates a tacky surface, can be prevented by the isocyanate/hydroxyl reaction.

Part A thus comprises an admixture of an oligomer having isocyanate moieties and acrylate moieties and an organic peroxide capable of generating free radicals upon decomposition. Part A may also comprise an optional but preferred reactive diluent capable of polymerizing by exposure to actinic radiation; an optional, but preferred photoinitiator capable of generating free radicals when exposed to actinic radiation, as well as other optional additives for controlling the performance characteristics of the final product.

Non-exclusive examples of an oligomer having isocyanate moieties and acrylate moieties include an oligomer or polymer having at least one and preferably two olefinically unsaturated double bonds. Such are well known in the art. Suitable for use as polymerizable components aromatic, aliphatic, or cycloaliphatic diisocyanates and capped with hydroxy acrylates or methacrylates. Examples nonexclusively isophorone diisocyanate capped with 2-hydroxyethyl acrylate; a tolyene-2,6-diisocyanate capped with 2-hydroxyethylacrylate; a 4,4'-methylenebis(cyclohexyl isocyanate) capped with 2-hydroxyethyl acrylate; a tolylene-2,4-diisocyanate capped with 2-hydroxyethyl acrylate; a 4,4'-methylenebis(cyclohexyl isocyanate capped with 2-hydroxyethyl acrylate; an isophorone diisocyanate capped with 2-hydroxyethyl acrylate; a 4,4'-methylenebis(cyclohexylisocyanate) capped with 2-hydroxyethyl acrylate; an isophorone diisocyanate capped with 2-hydroxyethyl acrylate; 4,4'-methylenebis(cyclohexylisocyanate) capped with 2-hydroxyethyl acrylate; tolylene-2,4-diisocyanate capped with 2-hydroxyethyl methacrylate; isophorone diisocyanate capped with 2-hydroxyethyl methacrylate; a 4,4'-methylenebis(cyclohexylisocyanate) capped with 2-hydroxyethyl methacrylate; tolylene-2,4-diisocyanate capped with 2-hydroxyethyl methacrylate. Examples of oligomers with isocyanate and acrylate functionalities are Desmolux UV cure resins from Bayer Material Science such as Desmolux D-100, Desmolux D200 XP, Desmolux VPLS 2396 and combinations thereof.

In one embodiment, oligomer having isocyanate moieties and acrylate moieties are present in Part A in an amount of from about 10 wt.% to about 70 wt.%, preferably from about 30 wt.% to about 70 wt.%, and more preferably from about 40 wt.% to about 55 wt.% based on the weight of Part A.
Non-exclusive examples of organic peroxides include a diacyl peroxides, peroxyester and hydroperoxides. Examples are benzoyl peroxide, lauroyl peroxide, t-butyl peroctoate, t-butyl perbenzoate, cumene hydroperoxide, t-butyl hydroperoxide, hydrogen peroxide, and combinations thereof. In one embodiment, organic peroxides are present in Part A in an amount of from about 0.5 wt.% to about 5 wt.%, preferably from about 1 wt.% to about 3 wt.%, and more preferably from about 1 wt.% to about 2.5 wt.% based on the weight of Part A.

The free radical polymerizable diluent may be any substituted vinyl monomer with one or more vinyl functional groups. Non-exclusive examples of useful free radical polymerizable diluents are alkyl acrylates and alkyl methacrylates like isobornyl (meth)acrylate, isodecyl acrylate, isodecyl (meth)acrylate, lauryl (meth)acrylate, cyclic trimethylolpropane formal acrylate, octyldecyl acrylate, tetrahydrofurfuryl (meth)acrylate, tridecyl (meth)acrylate. Other useful but not limited to free radical polymerizable diluents are 2-hydroxyethyl (meth)acrylate, phenoxyethyl (meth)acrylate, N-vinyl caprolactam, N,N-dimethyl acrylamide, 2(2-ethoxyethoxy) ethyl acrylate, caprolactone acrylate, polypropylene glycol monomethacrylate, 1,3-butylene glycol dimethacrylate, 1,4-butanediol dimethacrylate; 1,6 -hexanediol diacrylate; 1,6 hexanediol di(meth)acrylate, tricyclodecane dimethanol di(meth)acrylate, tripropylene glycol diacrylate, trimethylolpropane tri(meth)acrylate; ethoxylated trimethylolpropane triacrylate, trimethylolpropane triacrylate, tris (2-hydroxy ethyl) isocyanurate triacrylate, aliphatic epoxy acrylate, modified epoxy acrylate, epoxy methacrylate, dendritic polyester acrylate and the like, and combinations thereof. In one embodiment, when a free radical polymerizable diluent is present in Part A it is present in an amount of from about 20 wt.% to about 70 wt.%, preferably from about 20 wt% to about 60 wt.%, and more preferably from about 25 wt.% to about 55 wt.% based on the weight of Part A.

Non-exclusive examples of useful free radical polymerization photoinitiators themselves photolytically generate free radicals by a fragmentation. The photoinitiator may be any class of free radical photoinitiators, including Norrish Type I and Type II photoinitiators. Examples of suitable Type I homolytic free-radical photoinitiators are benzoin derivatives, methylolbenzoin and 4-benzoyl-1,3-dioxolane derivatives, benzilketals, α,α-dialkoxyacetophenones, α-hydroxy alkylphenones, α-aminoalkylphenones, acylphosphine oxides, bisacylphosphine oxides, acylphosphine sulphides, halogenated acetophenone derivatives, and the like. Examples of suitable Type-II (hydrogen abstraction) photoinitiators are aromatic ketones such as benzophenone, xanthone, derivatives of benzophenone (e.g. chlorobenzophenone), blends of benzophenone and benzophenone derivatives (e.g. Photocure 81, a 50/50 blend of 4-methyl-benzophenone and benzophenone), Michler's Ketone, Ethyl Michler's Ketone, thioxanthone and other xanthone derivatives like Quantacure ITX (isopropyl thioxanthone), benzil, anthraquinones (e.g. 2-ethyl anthraquinone), coumarin, and the like. Chemical derivatives and combinations thereof may also be used. In one embodiment, when a free radical polymerization photoinitiator is present in Part A it is present in an amount of from about 1 wt.% to about 10 wt.%, preferably from about 2 wt.% to about 7 wt.%, and more preferably from about 2 wt.% to about 5 wt. % based on the weight of Part A.

Part A may also include additional additives, such as heat stabilizers, UV-light stabilizers, free-radical scavengers (e.g., hindered amine light stabilizer compounds), dyes, pigments, surfactants, plasticizers, opacity-modifying agents, antioxidants, adhesion promoters, surfactants, fillers, flame retardants, thixotropic agents, waxes, and combinations thereof. In one embodiment, when one of these a additional additives is present in Part A it is present in an amount of from about 0 wt.% to about 5 wt. %, preferably from about 0 wt.% to about 3.5 wt.%, and more preferably from about 0 wt.% to about 2 wt. % based on the weight of Part A.

Part B comprises a polyol, and a catalyst that can decompose the organic peroxide. Non-exclusive examples of useful polyols include polyester polyols, polyether polyols and combinations thereof. Preferred polyols have an average molecular weight from about 500 g/mole to 5000 g/mole, functionality of greater than 1.5 to 3. Examples of polyols are the Desmophen series from Bayer, Lupraphen and Pluracol series such as Pluracol TP2450 from BASF, Poly-G polyols from Arch Chemical Industries, Polyol series from ITWC Inc such as Poly S and Poly P. In one embodiment, the polyol is present in Part B in an amount of from about 5 wt.% to about 40 wt.%, preferably from about 10 wt.% to about 30 wt.%, and more preferably from about 10 wt.% to about 25 wt. % based on the weight of Part B. Non-exclusive examples of useful catalysts that can decompose the organic peroxide can be an inorganic cobalt and copper compound, ions of other compounds like iron and vanadium, acetyl thiourea and metal oxide salt. In one embodiment, the catalyst that can decompose the organic peroxide is present in Part B in an amount of from about 0.01 wt.% to about 1.0 wt.%, preferably from about 0.01 wt% to about 0.80 wt.%, and more preferably from about 0.01 wt.% to about 0.10 wt.% based on the weight of Part B.

Part B may also contain free radical polymerizable diluent and/or additive as described and in the amounts above for Part A.

Part B may also contain a urethane acrylate or methacrylate oligomer. Non-exclusive examples of useful free radical polymerizable urethane acrylate or methacrylate monomers and free radical polymerizable urethane acrylate or methacrylate oligomers are a tetramethylene glycol urethane acrylate oligomer, and a propylene glycol urethane acrylate oligomer. Others are urethane acrylate or urethane methacrylate oligomers based upon polyethers or polyesters, which are reacted with aromatic, aliphatic, or cycloaliphatic diisocyanates and capped with hydroxy acrylates. Examples of oligomers nonexclusively include difunctional urethane acrylate oligomers such as a polyester of hexanedioic acid and diethylene glycol, terminated with isophorone diisocyanate, capped with 2-hydroxyethyl acrylate (CAS 72121-94-9); a polypropylene glycol terminated with tolyene-2,6-diisocyanate, capped with 2-hydroxyethylacrylate (CAS 37302-70-8); a polyester of hexanedioic acid and diethylene glycol, terminated with 4,4'-methylenebis(cyclohexyl isocyanate), capped with 2-hydroxyethyl acrylate (CAS 69011-33-2); a polyester of hexanedioic acid, 1,2-ethanediol, and 1,2 propanediol, terminated with tolylene-2,4-diisocyanate, capped with 2-hydroxyethyl acrylate (CAS 69011-31-0); a polyester of hexanedioic acid, 1,2-ethanediol, and 1,2 propanediol, terminated with 4,4'-methylenebis(cyclohexyl isocyanate, capped with 2-hydroxyethyl acrylate (CAS 69011-32-1); a polyester of hexanedioic acid, diethylene glycol, terminated with isophorone diisocyanate, capped with 2-hydroxyethyl acrylate (CAS 72121-94-9); a polytetramethylene glycol ether terminated with 4,4'-methylenebis(cyclohexylisocyanate), capped with 2-hydroxyethyl acrylate; and a hydroxy terminated polybutadiene terminated with isophorone diisocyanate, capped with 2-hydroxyethyl acrylate; Also useful are monofunctional urethane acrylate oligomers, such as a polypropylene terminated with 4,4'-methylenebis(cyclohexylisocyanate), capped with 2-hydroxyethyl acrylate and 1-dodosanol. They also include difunctional urethane methacrylate oligomers such as a polytetramethylene glycol ether terminated with tolylene-2,4-diisocyanate, capped with 2-hydroxyethyl methacrylate; a polytetramethylene glycol ether terminated with isophorone diisocyanate, capped with 2-hydroxyethyl methacrylate); a polytetramethylene glycol ether terminated with 4,4'-methylenebis(cyclohexylisocyanate), capped with 2-hydroxyethyl methacrylate; and a polypropylene glycol terminated with tolylene-2,4-diisocyanate, capped with 2-hydroxyethyl methacrylate. The urethane (meth)acrylate oligomer is usually present Part B in an amount of from about 5 wt.% to about 50 wt.%, preferably from about 10 wt.% to about 40 wt.%, and more preferably from about 15 wt.% to about 30 wt. % based on the weight of Part B.

In use, the 2-part system of Part A and Part B is mixed in a 1:1 ratio and the resultant mixture is stable for at least 30 minutes, also known as the pot life). Pot life for this system is defined as when the viscosity exceeds 200 cP after 30 minutes. The mixture of Part A and B usually has a viscosity range from 100cP to 200 cP. In one embodiment, the mixture composition is applied as a coating to a substrate surface at a thickness of from about 0.0001 inch to about 0.5 inch. In another embodiment, is first applied to a substrate surface as above and then attached to another substrate so that the mixture performs as an adhesive. Any suitable substrate may be used such as metals, plastics and the like.

The combined composition mixture of Part A and Part B may then be exposed to sufficient actinic radiation to initiate curing of the composition. Polymerization may be initiated by exposure to ultraviolet, visible light and/or electron beam radiation, usually in the 200-500 nm range. The length of time for exposure is easily determined by those skilled in the art and depends on the selection of the particular components of the radiation curable composition. Typically exposure ranges from about 0.2 second to about 120 seconds, preferably from about 0.5 seconds to about 60 seconds, and more preferably from about 0.5 seconds to about 30 seconds. Typical exposure intensities range from about 5 mW/cm² to about 2500 mW/cm², preferably from about 50 mW/cm² to about 1500 mW/cm², and more preferably from about 100 mW/cm² to about 1000 mW/cm².

When the mixture is exposed, a free-radical reaction (radical chain-growth polymerization) occurs which reacts with the oligomer having both acrylic and isocyanate moieties. In a dark reaction, the non-photo-reacted mixture undergoes two kinds of chemical cures. Polymerization or curing at ambient condition that is (radical chain-growth polymerization) initiated by the organic peroxide generated free radicals which starts the crosslinking of the oligomer possessing both vinyl and isocyanate moieties, the photo-reactive diluents, and the crosslinker possessing both vinyl and hydroxyl moieties; and curing at ambient condition (polyaddition polymerization) occurs between the isocyanate groups of the oligomer possessing vinyl moieties and hydroxyl functional group. Hydroxyl groups are present in the polyol as well in the cross linker possessing the vinyl moieties. These tri-cure reactions in a two part system, provides a cured adhesive that is tack free, tough yet flexible polymeric crosslinked matrix within 24-48 hours at ambient conditions.

In general, the mixture can dark cure with a tack-free surface at 25°C, 50% relative humidity in about 48 hours or less. In general, the mixture rises less than about 200% in viscosity, more preferably about 100%, after 30 minutes of mixing at ambient temperatures. In general, the difference between the elongation of ambient cured and light-cured resin after 14 days of aging at ambient conditions is about 75%, or less, more preferably about 50% or less. Usually, the composition has a difference between the modulus of ambient cured and light-cured resin after 14 days of aging at ambient conditions about 50% or less, more preferably 25% or less. Usually, the composition shows a difference between the tensile of ambient cured and light-cured resin after 14 days of aging at ambient conditions about 50% or less, more preferably 25% or less.

The following non-limiting examples serve to illustrate the invention.

### EXAMPLES

| Type of Reaction | Actinic + NCO-polyol | Actinic + NCO-polyol + Peroxide | Actinic + NCO + Peroxide |
|---|---|---|---|
| Part A | | | |
| Tetrahydrofurfuryl Methacrylate | 40.0 | 38.0 | 38.0 |
| Urethane Acrylate with Aliphatic Isocyanate | 50.0 | 50.0 | 50.0 |
| 1-hydroxycyclohexyl phenyl ketone | 5.0 | 5.0 | 5.0 |
| T-butyl perbenzoate | -- | 2.0 | 2.0 |
| Isobornyl Acrylate | 5.0 | 5.0 | 5.0 |
| | | | |

| Part B | | | |
|---|---|---|---|
| Isobornyl Acrylate | 52.0 | 52.0 | 69.5 |
| Urethane Acrylate | 24.0 | 24.0 | 30.0 |
| Mixed Cobalt Carboxylates in Isobornyl Acrylate (10% soln) | 0.5 | 1.0 | 0.5 |
| Polyether triol | 23.0 | 23.0 | -- |
| Total (Parts by weight) | 100.0 | 100.0 | 100.00 |

### Dark Cure Polymerization Test

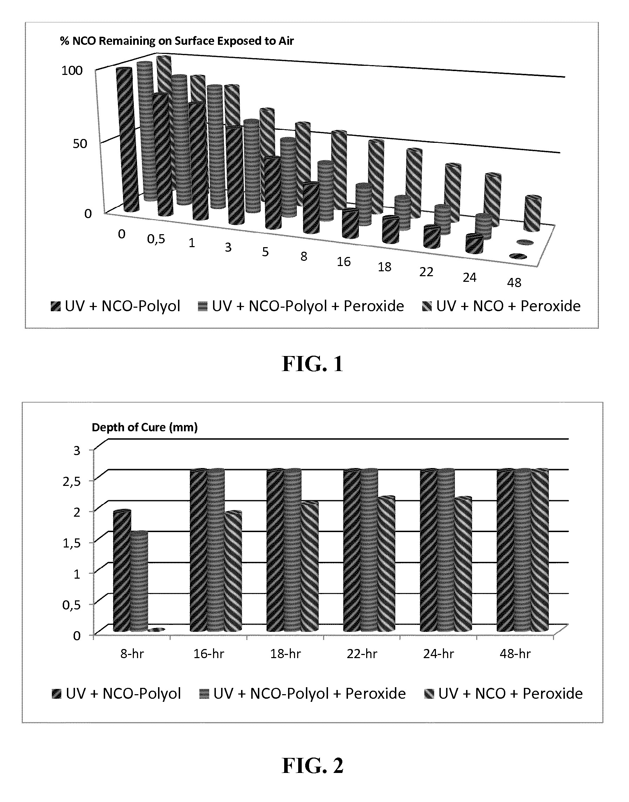

A 2.0 g sample of 1:1 mixtures of Part A and B were poured onto the bottom side of a 50-ml PP beaker 25mm in diameter. Samples were kept in a dark area and allowed to cure over a period of time. The polyaddition reaction of the isocyanate groups was followed quantitatively by monitoring the disappearance of the peak at 2271 cm⁻¹ using FTIR spectrophotometer. The percent isocyanate remaining on surface exposed to air was recorded. Condition of the surface exposed to air was noted and the corresponding depth of cure was recorded. (See Figures 1 & 2)

### Light Cured Tensile Test

Light cured samples of 1:1 mixtures of Part A and B were prepared as per ASTM D638 and aged under ambient temperature for a period of time and pulled on an Instron Model 4467 using a 200-lb load cell at a speed of 1.0 inch/min. Tensile at break (psi), elongation at break (%) and Young's modulus (psi) were recorded. (See Table 1)

### Dark Cured Tensile Test

1:1 mixtures of Part A and B were poured onto the Teflon Dog bone molds as per ASTM D638. Samples were then stored in a dark area and allowed to cure for a period of time at ambient temperature (approximately 25°C) and 40%-65% relative humidity. Dark cured samples were then removed from the mold and pulled on an Instron Model 4467 using a 200-lb load cell at a speed of 1.0 inch/min. Tensile at break (psi), elongation at break (%) and Young's modulus (psi) were recorded. (See Table 1).

### Light Cured Tg Test

1:1 mixtures of Part A and B were cured under a metal halide lamp at 200mW/cm² for 1 minute in a 3mm Teflon molds. Light cured samples were then aged under ambient temperature for a period of time and tested on a TA Instrument DMA Q800. Glass transition temperatures (Tg) in °C were recorded. (See Table 1)

### Dark Cured Tg Test

1:1 mixtures of Part A & B were poured onto a 3mm Teflon molds. Samples were then stored in a dark area and allowed to cure for a period of time at ambient temperature (approximately 25°C) and 40%-65% relative humidity. Dark cured samples were then removed from the mold and tested on a TA Instrument DMA Q800. Glass transition temperatures (Tg) in °C were recorded. (See Table 1)

### RESULTS:

### Dark Cure Polymerization Test

Fig 1 shows the rate of reaction of the moisture cure part of the formulation is related to the disappearance of NCO group with time. This relates to the overall cure and thereby will affect the overall mechanical parameters of the adhesives.

Actinic + NCO-Polyol: Has the fastest rate of isocyanate group disappearance, essentially completely gone after 48-hrs. The sample turned essentially completely solid with dry and tack free surface after 24-hrs.

Actinic + NCO-Polyol + Peroxide: Has the same trend as the first formulation, with isocyanate groups essentially completely gone after 48-hrs. Although the percent isocyanate remaining within the time increments are slightly more than the first formulation, it also turned solid with dry and tack free surface within 24 to 48 hrs.

Actinic + NCO + Peroxide: Has the slowest rate, showing 35% isocyanate groups remaining after 48-hrs. The sample has a layer of wet, soft gel film on the surface after 24-hrs. The surface has some degree of wetness and tackiness even after 48-hrs. This formulation has no polyol added. The disappearance of isocyanate groups is mainly due to the reaction of isocyanate with moisture in air.

These trends show that the polyol or crosslinker (with hydroxyl groups) is necessary in the formulation to have an efficient NCO/hydroxyl addition reaction preventing surface oxygen inhibition. The reaction of isocyanate with moisture in air in addition to the free-radical polymerization thru the metal-catalyzed peroxide decomposition were not sufficient to achieve a dry tack free cured material within a 24-48 hrs period at ambient temperature.

Fig 2 shows:
Actinic + NCO-Polyol: Partially solid after 8-hrs and essentially completely solid achieving full depth of cure after 16-hrs.
Actinic + NCO-Polyol + Peroxide: Same trend as the first formulation achieving essentially full depth of cure after 16-hrs.
Actinic + NCO + Peroxide: The sample was still liquid after 8-hrs, achieving essentially full depth of cure only after 48-hrs.

These trends show that the polyol or crosslinker (with hydroxyl groups) is necessary in the formulation to have an efficient NCO/hydroxyl addition reaction forming a solid material within a shorter period of time. The reaction of the isocyanate groups with moisture (in air) in addition to the free-radical polymerization thru the metal-catalyzed peroxide decomposition took 48-hrs to have the same full depth of cure at ambient temperature.

**TABLE 1**

| Tensile and Glass Transition (Tg) | | | | | | | | | | | | | | | |
|---|---|---|---|---|---|---|---|---|---|---|---|---|---|---|---|
| | **UV + NCO-Polyol** | | | | | **UV+ NCO-Polyol + Peroxide** | | | | | **UV + NCO + Peroxide** | | | | |
| | **24-hr** | **day 7** | **day 14** | **% change** | | **24-hr** | **day 7** | **day 14** | **% change** | | **24-hr** | **day 7** | **day 14** | **% change** | |
| | | | | **day 7** | **day 14** | | | | **day 7** | **day 14** | | | | **day 7** | **day 14** |
| Light Cure Tensile (psi) | 2,786 | 4,266 | 4,335 | 53% | 56% | 2,509 | 3,578 | 3,598 | 43% | 43% | 2,811 | 4,668 | 5,532 | 66% | 97% |
| Light Cure Modulus (psi) | 45,731 | 59,924 | 62,527 | 31% | 37% | 35,837 | 55,166 | 48,750 | 54% | 36% | 51,637 | 62,951 | 79,044 | 22% | 53% |
| Light Cure Elongation (%) | 20 | 10 | 16 | -50% | -20% | 40 | 14 | 18 | -65% | -55% | 20 | 8 | 7 | -60% | -65% |
| | | | | | | | | | | | | | | | |
| Dark CureTensile (psi) | 1.68 | 2.4 | 1.96 | 43% | 17% | 2,676 | 2,720 | 2,803 | 2% | 5% | 2,658 | 4,046 | 3,972 | 52% | 49% |
| Dark Cure Modulus (psi) | 239 | 224 | 295 | -6% | 23% | 30,188 | 39,119 | 42,104 | 30% | 39% | 38,638 | 63,224 | 64,433 | 64% | 67% |
| Dark Cure Elongation (%) | 17 | 17 | 15 | 0% | -12% | 53 | 24 | 27 | -55% | -49% | 48 | 10 | 20 | -79% | -58% |
| | | | | | | | | | | | | | | | |

| % **Difference between Dark Cure and Light Cure** | | | | | | | | | | | | | | | |
|---|---|---|---|---|---|---|---|---|---|---|---|---|---|---|---|
| % change Tensile | -100% | -100% | -100% | -100% | | 7% | -24% | -22% | | | -5% | -13% | -28% | | |
| % change Modulus | -99% | -100% | -100% | | | -16% | -29% | -14% | | | -25% | 0% | -18% | | |
| % change Elongation | -15% | 70% | -6% | | | 33% | 71% | 50% | | | 140% | 25% | 186% | | |
| | | | | | | | | | | | | | | | |
| Light Cure Tg | 74°C | 79°C | 80°C | | | 64°C | 73°C | 76°C | | | 68°C | 80°C | 83°C | | |
| Dark CureTg | too brittle to test | | | | | 60°C | 65°C | 66°C | | | 62°C | 71°C | 73°C | | |

Actinic + NCO-Polyol: There is a considerable difference between the light cured vs. dark cured tensile strength. The dark cured samples have essentially no tensile strength, remained soft and brittle even as it aged. For the light cured sample, the tensile and modulus increased with slight decreased in elongation overtime. The properties of the cured samples at the two different conditions are vastly different such as tensile values are 2786 vs 1.68 and modulus are 45731 vs 239.

Actinic + NCO-Polyol + Peroxide vs. Actinic + NCO + Peroxide: The tensile strength and Tg of the light cured vs. dark cured samples are very comparable for the Actinic + NCO-Polyol + Peroxide system. As the sample aged from 24-hr to 14 days, tensile and modulus of light cured and dark cured samples increased with a corresponding reduction in elongation. The same trend is with Tg. For the Actinic + NCO + Peroxide, there are significant changes in physical properties as it aged. The change in tensile strength and modulus of the Actinic cured samples after 14 days is 97% and 53%, respectively. Whereas for Actinic + NCO-Polyol + Peroxide the change in tensile strength and modulus after 14 days is lower at 43% and 36%, respectively. The same trend is with the dark cured samples. In addition, the difference in elongation between the Actinic cured samples vs. dark cured samples is significantly higher for Actinic + NCO + Peroxide. The elongation difference is 186% whereas it is only 50% for Actinic + NCO-Polyol + Peroxide. The elongation property of the material in the Actinic cured area and dark cured area is significantly higher for Actinic + NCO-Polyol + Peroxide as compared to Actinic + NCO + Peroxide.

Considering all physical properties such as Tg and modulus (14 days) along with tack free surface less than 48 hours Actinic + NCO-Polyol + Peroxide is useful where the above requirements are demanded which include electronic, battery and LCD displays.

The free-radical polymerization through the metal-catalyzed peroxide decomposition is necessary to developed tensile strength and toughness in the shadow/dark cure. Over time it showed the most shifting in properties as the cured material becoming more rigid and less flexible. With the NCO-Polyol addition reaction only, the dark cured material has no tensile strength and very weak. The dark cured material has inferior tensile and Tg properties compared to the light cured. The tri-cure formulation, having the photoinitiated free-radical polymerization, metal-catalyzed free-radical peroxide decomposition and the NCO/Polyol addition reaction all in one system, produced the most balanced properties. The light and dark cured material has comparable properties. It has good tensile strength and relatively stable properties overtime.

**TABLE 2**

| | Part A + Part B |
|---|---|
| initial | 123 cP |
| 15min | 140 cP |
| 25min | 149 cP |
| 35min | 161 cP |
| 45min | 169 cP |
| 60min | 177 cP |
| 120min | still liquid |

It can be seen that the resultant mixture has a stable 30 minute pot life of less 200 cP viscosity.

The Actinic + NCO- Polyol system is very efficient in hardening/curing a resin in the dark within a short period at ambient temperature. It is not inhibited by atmospheric oxygen, producing a dry tack free surface dark cured resin. The main disadvantage is the lack of tensile strength, producing a dark cured resin with very inferior tensile properties compared to light cured resin.

Actinic + NCO + Peroxide system produced a light and dark cured resin with high tensile properties at ambient temperature. The main disadvantage is that it has the most change in tensile properties overtime. The cured crosslinked resin is getting harder and less flexible. Another disadvantage is that the surface of the dark cured resin remains slightly wet and tacky since the free-radical peroxide reaction is inhibited by atmospheric oxygen. The additional reaction of isocyanate with moisture in air is not enough to prevent the oxygen inhibition.

Actinic + NCO-Polyol + Peroxide tri-cure system relatively produced the most balance properties. It has the fast dark cure reaction that is not inhibited by atmospheric oxygen and generally stable tensile, Tg properties overtime attributed from the NCO-Polyol addition reaction. This is complemented by the free radical photoinitiated and metal-catalyzed peroxide reactions producing a light and dark cured crosslinked resin with comparable tensile properties at ambient temperature. The tri cure system also has a stable 30min pot life of less than 200 cP viscosity.

While the present invention has been particularly shown and described with reference to preferred embodiments, it will be readily appreciated by those of ordinary skill in the art that various changes and modifications may be made without departing from the spirit and scope of the invention. It is intended that the claims be interpreted to cover the disclosed embodiment, those alternatives which have been discussed above and all equivalents thereto.

## Claims

1. A two part composition comprising a Part A and a Part B, wherein Part A comprises an oligomer having both isocyanate and acrylate moieties, and an organic peroxide capable of generating free radicals upon decomposition; and Part B comprises a polyol, and a catalyst that can decompose the organic peroxide.

2. The two part composition of claim 1 comprising an admixture of a Part A and a Part B.

3. The two part composition according to any one or more of the preceding claims, wherein at least one of Part A and Part B further comprises a photoinitiator capable of generating free radicals when exposed to actinic radiation, wherein the photoinitiator preferably comprises one or more aromatic ketones, wherein the photoinitiator more preferably comprises at least one of a Norrish Type I photoinitiator, Norrish Type 2 photoinitiator or combinations thereof.

4. The two part composition according to any one or more of the preceding claims, wherein at least one of Part A and Part B further comprises a reactive diluent capable of polymerizing by exposure to actinic radiation.

5. The two part composition according to any one or more of the preceding claims, wherein at least one of Part A and Part B further comprises a urethane acrylate oligomer, a urethane methacrylate oligomer or combinations thereof.

6. The two part composition according to any one or more of the preceding claims, wherein at least one of Part A and Part B further comprises a catalyst capable of accelerating a reaction of the isocyanate moieties and the polyol.

7. The two part composition according to any one or more of the preceding claims, wherein Part A and Part B are present in a weight ratio of from about 1:2 to about 2:1.

8. The two part composition according to any one or more of the preceding claims, wherein at least one of Part A and Part B further comprises at least one of heat stabilizers, UV-light stabilizers, free-radical scavengers, hindered amine light stabilizer compounds, dyes, pigments, surfactants, plasticizers, opacity-modifying agents, antioxidants, adhesion promoters, surfactants, fillers, flame retardants, thixotropic agents, waxes, and combinations thereof.

9. A method for the preparation of an adhesive composition which comprises the steps of:
I) providing two composition parts comprising a Part A and a Part B, wherein Part A comprises an oligomer having isocyanate moieties and acrylate moieties, and an organic peroxide capable of generating free radicals upon decomposition; and Part B comprises a polyol, and a catalyst that can decompose the organic peroxide; then
II) combining of Part A and Part B thereby reacting the isocyanate moieties with the polyol to produce a combination of a urethane acrylate oligomer, the organic peroxide and the catalyst; then
in either order III) and IV):
III) exposing the combination formed in II) to sufficient actinic radiation to polymerize at least a portion of the urethane acrylate oligomer; and
IV) causing the catalyst to decompose the organic peroxide thus generating free radicals upon decomposition of the organic peroxide, which free radicals polymerize at least a portion of the urethane acrylate oligomer.

10. The method of claim 9 wherein at least one of Part A and Part B further comprises a photoinitiator capable of generating free radicals when exposed to actinic radiation, wherein the photoinitiator preferably comprises at least one of a Norrish Type I photoinitiator, Norrish Type 2 photoinitiator or combinations thereof.

11. The method according to any one or more of claims 9-10, wherein at least one of Part A and Part B further comprises a reactive diluent capable of polymerizing by exposure to actinic radiation.

12. The method according to any one or more of claims 9-11, wherein at least one of Part A and Part B further comprises a urethane acrylate oligomer, a urethane methacrylate oligomer or combinations thereof.

13. The method according to any one or more of claims 9-12, wherein at least one of Part A and Part B further comprises a catalyst capable of accelerating a reaction of the isocyanate moieties and the polyol.

14. The method according to any one or more of claims 9-13, wherein Part A and Part B are present in a weight ratio of from about 1:2 to about 2:1.

15. The method according to any one or more of claims 9-14, wherein the exposing is conducted by exposure to one or more of ultraviolet light, visible light, electron beam radiation, or combinations thereof, wherein the exposing is preferably conducted by exposure to one or more of ultraviolet light or visible light or combinations thereof in a range of from about 200 nm to about 500 nm range for from about 0.2 second to about 120 seconds, at an exposure intensity of from about 5 mW/cm² to about 2500 mW/cm², wherein the exposing is preferably conducted by exposure at a wavelength of from about 300 nm to about 465 nm.
